# EUROPEAN PATENT APPLICATION

(11) **EP 1 645 817 A2**
(43) Date of publication of application: **12.04.2006**
(21) Application number: 05009806.0
(22) Date of filing: 04.05.2005
(51) Int. Cl.: F25B 13/00, F25B 47/02

(54) **Air conditioner**

(30) Priority: 08.10.2004 JP 2004295934
(71) Applicant: MATSUSHITA ELECTRIC INDUSTRIAL CO., LTD., Kadoma-shi, Osaka 571-8501 (JP)
(72) Inventor: Nishihara, Yoshikazu, Koka-shi Shiga 529-1851 (JP); Sato, Shinichi, Higashiomi-shi Shiga 527-0015 (JP); Uchiyama, Kuniyasu, Kusatsu-shi Shiga 525-0045 (JP)
(74) Representative: Turi, Michael

(57) **Abstract**

An air conditioner includes a cooling cycle provided by connecting a compressor (1), a four-way valve (2), an indoor heat exchanger (3), a decompressor (4) and an outdoor heat exchanger (5) with a coolant circuit; a first bypass circuit (6) for connecting a point between the indoor heat exchanger (3) and the decompressor (4) to a suction part of the compressor (1); and a second bypass circuit (9) for connecting a point between the four-way valve (2) and the indoor heat exchanger (3) or a point between the compressor (1) and the four-way valve (2) to a point between the decompressor (4) and the outdoor heat exchanger (5). The outdoor heat exchanger (5) is defrosted, a first bypass operation for allowing coolant heated by the coolant heater (8) to flow to the suction part of the compressor (1) and a second bypass operation for allowing coolant to flow through the outdoor heat exchanger (5).

## Description

The present invention relates to an air conditioner capable of performing a defrost cycle for eliminating frost on an outdoor heat exchanger during operation of a heat pump in a heating cycle.

The operation of a defrost system employed in a conventional heat-pump type air conditioner includes shifting the flow paths of a four-way valve and reversing coolant flow in a cooling cycle.

Thus, during a defrost cycle, the flow path of coolant is directed to be same as in the cooling cycle, and by directing high temperature and high pressure coolant through an outdoor heat exchanger, it is possible to eliminate frost thereon.

In this defrosting system, an indoor heat exchanger functions as an evaporator during a defrost cycle. Consequently, indoor ambient temperature is reduced; this effect is undesirable.

To solve this problem, an air conditioner capable of performing a defrost cycle while continuously in a heating mode has been considered.

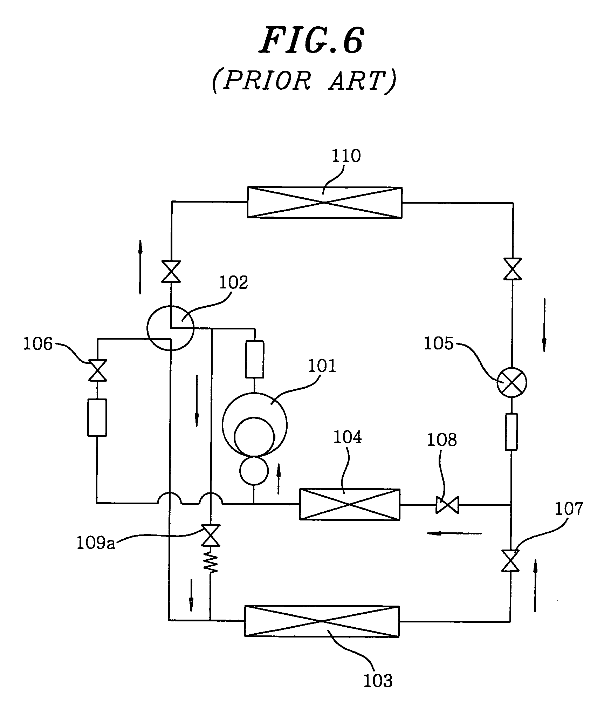

Fig. 6 represents a block diagram of a cooling cycle for a conventional air conditioner.

As shown in the figure, the heat-pump type cooling cycle is implemented by a coolant circuit including compressor 101, four-way valve 102, indoor heat exchanger 110, expansion device 105 and outdoor heat exchanger 103. More specifically, the cooling cycle includes a coolant heating circuit, which has coolant heater 104 and connects a point between expansion device 105 and outdoor heat exchanger 103 to the suction part of compressor 101; and a defrosting circuit for connecting the discharge side of compressor 101 and outdoor heat exchanger 103 through two-way valve 109a. When defrosting outdoor heat exchanger 103 during a heat pump operation in the cooling cycle, the flow of the coolant heated by coolant heater 104 splits into two streams after passing through compressor 101. One is directed to indoor heat exchanger 110 while the other is directed to outdoor heat exchanger 103 through the defrosting circuit. The two streams merge at the inlet of the coolant heating circuit and coolant is then heated again by coolant heater 104 (see, for example, Japanese Patent Laid-open Application No. H11-182994, Fig. 6).

However, the foregoing cooling cycle has disadvantages as explained below.

The cooling cycle is set up such that by opening two-way valve 109a during a defrost cycle, coolant gas discharged from compressor 101 is partially diverted to the line connecting a point upstream of four-way valve 102 and outdoor heat exchanger 103. As a result, two-way valve 106 is installed to prevent hot gas coolant, intended to defrost heat exchanger 103, from flowing back to the suction part of compressor 101.

Two-way valve 106, which is installed on the suction part of compressor 101, has a large diameter to reduce a head loss during cooling and heating cycles. As a result, the valve becomes very costly.

Further, when heat-pump operation is switched over to coolant heating operation by opening two-way valve 108, the flow direction of coolant through outdoor heat exchanger 103 is reversed to initiate a defrost cycle. Therefore, two-way valve 107 is closed before initiating a defrost cycle to stop the flow of coolant through heat exchanger 103. Two-way valve 107 is installed on the inlet side (during a normal heating cycle, but outlet in a defrost cycle) of outdoor heat exchanger 103.

Overall, the foregoing air conditioning/defrosting system requires four two-way valves. Thus, not only is the system complicated to operate, it is very costly.

Moreover, if coolant A were to represent coolant out of compressor 101 that has been diverted to outdoor heat exchanger 103 in a defrost cycle and coolant B as that directed through indoor heat exchanger 110 for heating indoor ambient, coolants A and B merge at a specific point before being directed to coolant heater 104 as explained above. Thus, if the head of coolant B is higher than that of coolant A in a defrost cycle, coolant B will flow through outdoor heat exchanger 103, and, if the reverse is true, then coolant A will flow through indoor heat exchanger 110. Either case will cause failure of defrosting and heating operation of the system.

Therefore, in order to perform a defrost cycle in outdoor heat exchanger 103 while continuing the heating mode in indoor heat exchanger 110, a proper pressure balance between coolant A and coolant B must be maintained.

Further, merging of coolants A and B streams tends to be a source of acoustic noise. Thus, a coolant joiner can be considered for abatement of the noise and for proper pressure balancing throughout the system.

Further, head loss increases at the node where coolants A and B merge because coolant circulation increases at the point. To compensate for the head loss, the diameter of coolant pipe is made bigger, which in turn increases the size of coolant heater 104.

It is, therefore, an object of the present invention to provide an air conditioner capable of running a cooling cycle by a simple bypass circuit and also capable of running a stable defrost cycle while continuously heating indoor ambient without problems caused by acoustic noise and improper pressure balance.

In accordance with a first embodiment of the present invention, there is provided an air conditioner including: a coolant circuit capable of performing a heat pump type cooling cycle and including a compressor, a four-way valve, an indoor heat exchanger, a decompressor and an outdoor heat exchanger; a first bypass circuit connected to the cooling cycle, for connecting a point between the indoor heat exchanger and the decompressor to a suction part of the compressor, the first bypass circuit being provided with a two-way valve and a coolant heater; and a second bypass circuit connected to the cooling cycle, for connecting a point between the four-way valve and the indoor heat exchanger or a point between the compressor and the four-way valve to a point between the decompressor and the outdoor heat exchanger, the second bypass circuit being provided with a two-way valve, wherein when the outdoor heat exchanger is defrosted, a first bypass operation for allowing coolant heated by the coolant heater to flow to the suction part of the compressor by opening the two-way valve of the first bypass circuit and a second bypass operation for allowing coolant to flow through the outdoor heat exchanger by opening the two-way valve of the second bypass circuit are performed. The foregoing configuration allows defrosting and heating operations to be performed at the same time.

Since a defrosting operation is performed at the same time as a heating operation, acoustic noise from coolant caused by shifting the four-way valve is not produced.

Further, since the four-way valve is not shifted during the defrost mode, fluctuations in the pressure and oil level of the compressor are negligible. As a result, operation of the compressor becomes reliable.

Further, even if the connection pipe length is long, since the defrost circuit is disposed outdoor, a reduction in compressor oil level is not caused by the pipe length. Therefore, notwithstanding long connection pipes, the reliability of the compressor operation is markedly improved.

Further, since only a part of coolant in the system is used for defrosting, a smaller amount of coolant is directed to the coolant heater than the foregoing conventional system. Thus, the coolant heater is designed more compact.

Preferably, an electronic expansion valve is employed as a decompressor. One ends of the first and the second bypass circuits where they connect to the cooling cycle are provided upstream and downstream of the electronic expansion valve, respectively. Further, during the defrost cycle, the electronic expansion valve is closed completely or it is throttled down to allow only an extremely small amount of coolant to flow through the valve. With this configuration, the electronic expansion valve which is typically used for heating and cooling in the heat-pump type cooling cycle can be utilized for defrosting, while dividing coolant's flow into two streams: one headed for heating indoor ambient by heating the coolant and the other headed for defrosting. Furthermore, since the heating and the defrosting circuits are configured using two two-way valves, the outdoor piping plan can be simplified, thereby lowering the overall equipment investments.

Preferably, the decompressor may be another two-way valve, and one ends of the first and the second bypass circuit where they connect to the cooling cycle are provided upstream and downstream of said another two-way valve, respectively. During a defrost cycle, said another two-way valve is closed. With this configuration, since the defrost cycle during a heating operation can be carried out simply by using the two-way valve, the equipment investment is further reduced.

Preferably, a decompressor or an electric expansion valve can be connected to the second bypass circuit to control the coolant flow. With this configuration, the heat capacity of a defrost cycle can be adjusted based on the frost buildup level on the outdoor heat exchanger.

Preferably, a decompressor can be disposed between the coolant heater and the heat exchanger, and the coolant heater is configured to function as an evaporator. With this arrangement, coolant passes through the decompresssor, and after being decompressed, it is then heated by the coolant heater. Therefore, the thermal absorptivity of coolant is improved, and the heat pump can carry out a cooling cycle more efficiently.

Preferably, a check valve can be disposed between the four-way valve and the point where the first bypass circuit meets the suction part of the compressor or between the four-way valve and the outdoor heat exchanger. The check valve is installed to direct coolant to the suction part of the compressor as the proper flow path. This configuration prevents a flow of coolant to the outdoor heat exchanger, and allows an efficient coolant heating.

Preferably, a distance between the connection part with a suction side of the first bypass circuit and the suction part of the compressor is set to be at least four times a diameter of a suction pipe of the compressor. With this configuration, the coolant is not subjected to an extreme change of conditions on the suction part of the compressor; this helps the compressor to operate smoothly and therefore reliably.

Preferably, the coolant heater includes: (1) a heater unit; (2) a coolant channel; and (3) a heat accumulation unit for surrounding the heater unit and the coolant channel with a heat accumulating material. With this configuration, the coolant heater can be designed more compact and can be disposed within an outdoor unit currently being used. Thus, no extra space is needed to accommodate the coolant heater; and this allows the outdoor unit to be shared with other systems, and this arrangement is simple and cost effective.

The above and other objects and features of the present invention will become apparent from the following description of preferred embodiments given in conjunction with the accompanying drawings, in which:
Fig. 1 is a block diagram of an air conditioner in accordance with a first preferred embodiment of the present invention;
Fig. 2 sets forth a block diagram of an air conditioner in accordance with a second preferred embodiment of the present invention;
Fig. 3 presents a block diagram of an air conditioner in accordance with a third preferred embodiment of the present invention;
Fig. 4 depicts a control block diagram in accordance with the present invention;
Fig. 5 shows a time chart describing the first embodiment of the present invention; and
Fig. 6 is a block diagram of a conventional air conditioner.

Hereinafter, preferred embodiments of the present invention will be described in detail with reference to the accompanying drawings. Here, it is to be noted that the present invention is not limited to the embodiments.

### (First preferred embodiment)

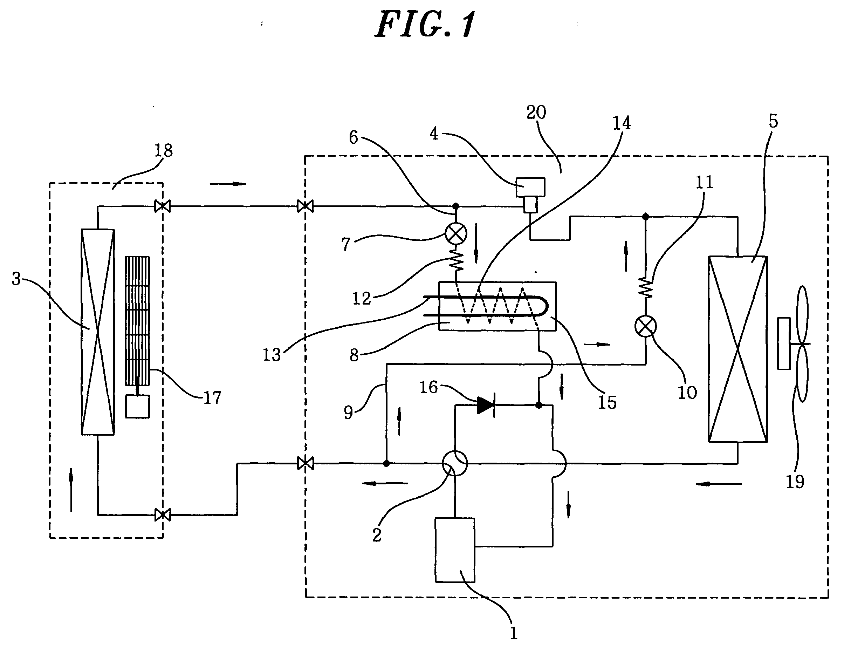

Fig. 1 shows a block diagram of a configuration of an air conditioner in accordance with a first preferred embodiment of the present invention. In Fig. 1, outdoor unit 20 includes compressor 1, four-way valve 2, decompressor 4, outdoor heat exchanger 5, first bypass circuit 6, coolant-heating on/off two-way valve 7, coolant heater 8, second bypass circuit 9, defrosting on/off two-way valve 10, decompressor 11 of second bypass circuit 9, decompressor 12 of first bypass circuit 6, coolant heater 13, coolant channel 14, heat accumulation unit 15, check valve 16, and outdoor fan 19. Indoor unit 18 includes indoor heat exchanger 3 and indoor fan 17. Here, decompressor 4 may be an electronic expansion valve.

Check valve 16 prevents a counter flow of coolant to ensure that coolant flows only in one direction even at a point where multiple coolant streams meet with different pressure levels.

Second bypass circuit 9 can be located at a position other than the one shown in Fig. 1. For example, one end of the second bypass circuit can be disposed between compressor 1 and four-way valve 2 and the other end between decompressor 4 and outdoor heat exchanger 5.

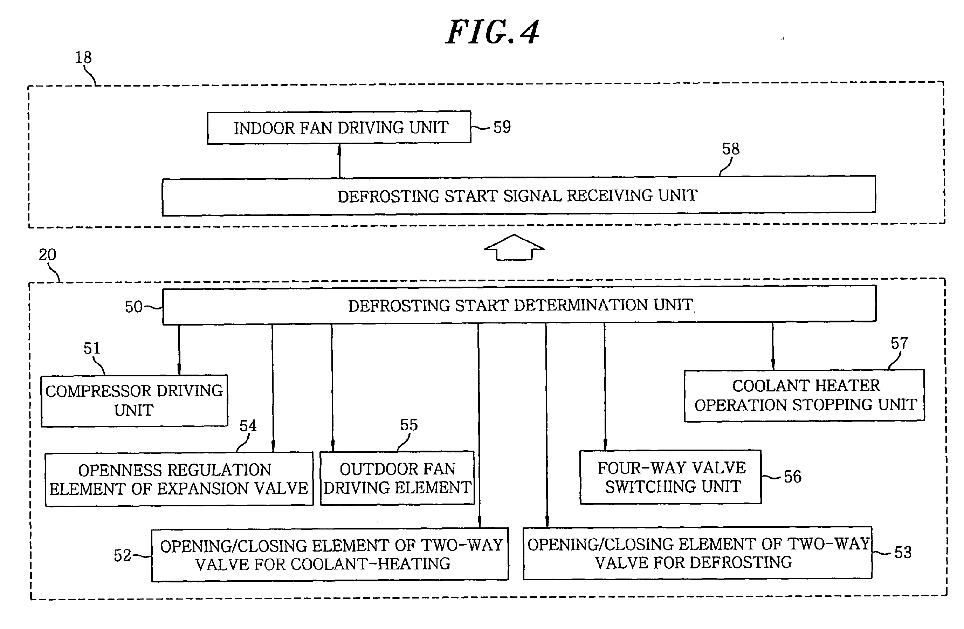

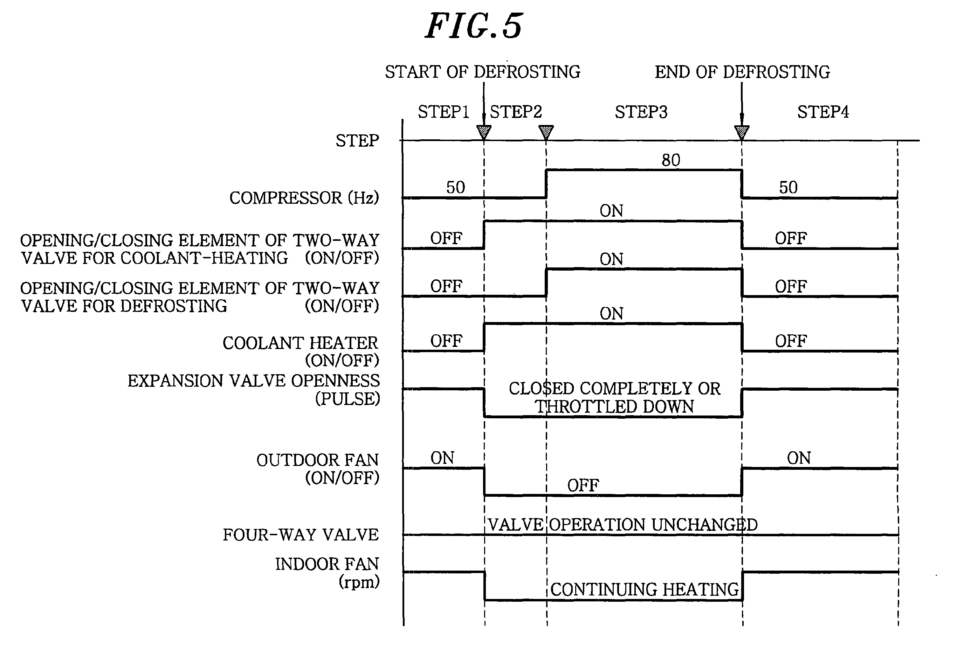

Fig. 4 provides a control block diagram describing the first embodiment of the present invention and Fig. 5 shows a time chart for executing the air conditioner's operation at different stages of the control operation provided in Fig. 4. In Fig. 4, defrosting start determination unit 50 in outdoor unit 20 determines whether to perform a defrost cycle. If the start of the defrost cycle is initiated, compressor driving unit 51, opening/closing element 52 of two-way valve for coolant-heating, opening/closing element 53 of two-way valve for defrosting, openness regulation element 54 of expansion valve, outdoor fan driving element 55, four-way valve switching element 56, coolant heater operation stopping unit 57 are operated as shown in Fig. 5, to thereby perform a defrost cycle.

To be more specific, if defrosting start signal receiving unit 58 of indoor unit 18 receives a defrosting start signal transmitted from defrosting start determination unit 50 of outdoor unit 20, indoor fan driving element 59 is controlled to reduce the speed of indoor fan 17 in response to the signal.

As can be seen from Fig. 5, if the start of the defrosting operation is initiated, a heating cycle by a heat pump in step 1 is switched to a heating cycle by a coolant heating cycle in step 2. At this time, coolant heating on/off two-way valve 7 is opened.

Further, by turning on coolant heater 13, a coolant heating cycle is initiated. At this time, expansion valve 4 is completely closed or is throttled down to allow only an extremely small amount of coolant to pass through.

Moreover, outdoor fan 19 is stopped during the defrost cycle. The direction of four-way valve 2 is unchanged as in the heating circuit because the heating operation is continued during the defrost cycle.

Further, indoor fan 17 is not stopped because the heating cycle is maintained.

Thereafter, the defrost cycle is executed in step 3, so defrosting on/off two-way valve 10 is opened. Further, compressor 101 is operated at an operational frequency (80 Hz) for defrosting.

Next, upon completion of the defrost cycle in step 4, a heat-pump heating cycle, which was carried on before the defrost cycle, is resumed.

Although the operational frequency of the compressor is varied in the first embodiment of the present invention, the defrost cycle can be performed with a compressor whose operational frequency stays constant.

### (Second preferred embodiment)

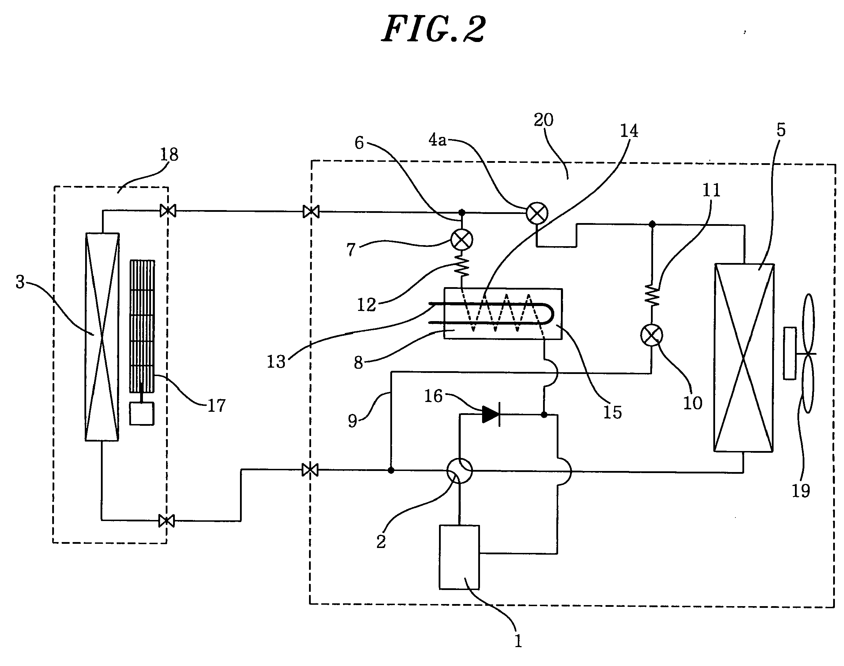

A second preferred embodiment of the present invention will be described with reference to Fig. 2.

The difference between the first and the second embodiments is that in the second embodiment, two-way valve 4a which provides an on-off switching action of coolant flow is employed instead of decompressor 4 which provides a decompressing function. Accordingly, a heating cycle is not interrupted by a defrost cycle.

For the purpose, two-way valve 4a is closed at the same time or with a short delay after coolant heating on/off two-way valve 7 is opened.

### (Third preferred embodiment)

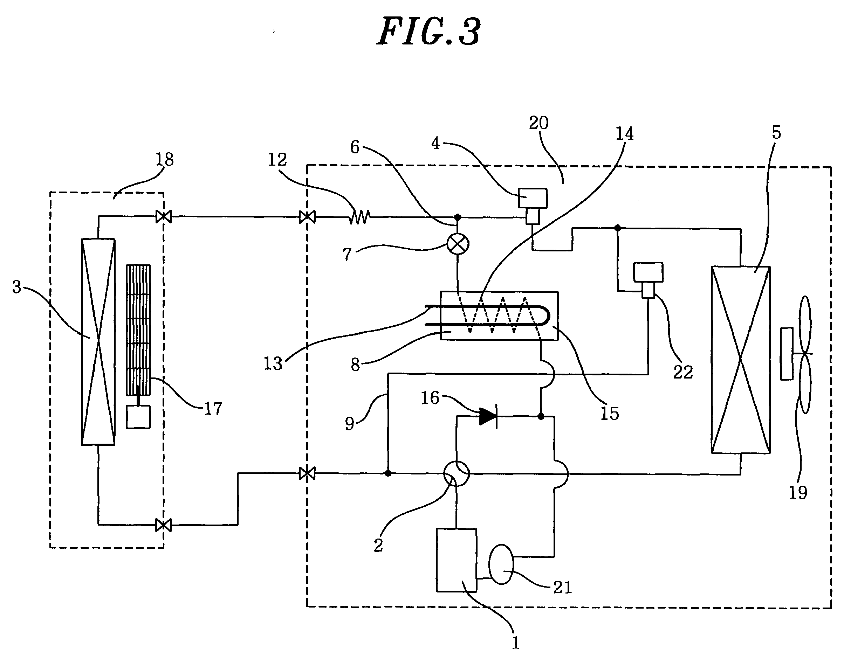

A third preferred embodiment of the present invention will now be described with reference to Fig. 3.

The difference between the first and the third embodiment is that in the third embodiment, decompressor 12 is not installed between coolant-heating on/off two-way valve 7 and coolant heater 8; instead, it is installed between indoor heat exchanger 3 and decompressor 4.

In this configuration, the layout of first bypass circuit 6 is made simpler, thereby making the system more compact and cost effective.

Furthermore, gas-liquid separator 21 is installed on the suction part of compressor 1.

Depending on the type of compressor 1, liquid entering the compressor could cause internal damage. In such a case, installation of gas-liquid separator 21 is required.

Especially, since a defrost cycle is often accompanied by condensation of coolant vapors, this condition must be considered to ensure reliable operation of the compressor.

Further, by employing electronic expansion valve 22 as decompressor 11 of second bypass circuit 9, the circulation amount of coolant for defrosting can be adjusted depending on the frost buildup amount on outdoor heat exchanger 5.

Moreover, in the above heat-pump type cooling cycle, it is possible to connect the gas-liquid separator to the suction part of the compressor depending on the compressor type.

In addition, any type of compressor can be installed in the system like a capacity-variable type compressor.

The electronic expansion valve installed in the system can be a type with a variable throttle device or a type with partial throttling without stopping coolant flow completely like an on/off two-way valve.

Decompressor 11 connected to second bypass circuit 9 in Fig. 2 or electronic expansion valve 22 in Fig. 3 can be located at any positions closer to a discharge side of compressor 1 or outdoor heat exchanger 5 than defrosting on/off two-way valve 10 is.

However, it is preferable to install decompressor 11 or electronic expansion valve 22 as close to outdoor heat exchanger 5 as possible, because this arrangement helps reducing the amount of liquid coolant collected in second bypass circuit 9 during a cooling cycle. As a result, the amount of coolant and oil accumulation can be reduced.

Further, installing the decomrpessor on the coolant heater side instead of the present location between the coolant heater and the indoor heat exchanger allows performing only a defrosting cycle.

Moreover, if decompressor 4 is installed on the side of indoor heat exchanger 3 of the basic heat pump circuit, although it can no longer be used exclusively for a defrost cycle because it would then affect both heating/cooling operations, it offers the advantage of eliminating the need for coolant heater 8 depending on the throttle selection.

A heater unit of coolant heater can be of any type as long as it is a heating element.

As described above, the air conditioner in accordance with the present invention is capable of executing a defrost cycle and a heating operation at the same time. Therefore, the present invention can also be applied to an air conditioner in an extremely cold environment.

While the invention has been shown and described with reference to the preferred embodiments, it will be understood by those skilled in the art that various changes and modifications may be made without departing from the scope of the invention as defined in the following claims.

## Claims

1. An air conditioner comprising:
a coolant circuit capable of performing a heat pump type cooling cycle and including a compressor, a four-way valve, an indoor heat exchanger, a decompressor and an outdoor heat exchanger;
a first bypass circuit connected to the cooling cycle, for connecting a point between the indoor heat exchanger and the decompressor to a suction part of the compressor, the first bypass circuit being provided with a two-way valve and a coolant heater; and
a second bypass circuit connected to the cooling cycle, for connecting a point between the four-way valve and the indoor heat exchanger or a point between the compressor and the four-way valve to a point between the decompressor and the outdoor heat exchanger, the second bypass circuit being provided with a two-way valve,
wherein when the outdoor heat exchanger is defrosted, a first bypass operation for allowing coolant heated by the coolant heater to flow to the suction part of the compressor by opening the two-way valve of the first bypass circuit and a second bypass operation for allowing coolant to flow through the outdoor heat exchanger by opening the two-way valve of the second bypass circuit are performed.

2. The air conditioner of claim 1, wherein the decompressor is an electronic expansion valve, one ends of the first and the second bypass circuits where they connect to the cooling cycle being provided upstream and downstream of the electronic expansion valve, respectively, and the electronic expansion valve being closed completely or throttled down to allow only an extremely small amount of coolant to flow through the valve.

3. The air conditioner of claim 1, wherein the decompressor is another two-way valve, one ends of the first and the second bypass circuits where they connect to the cooling cycle being provided upstream and downstream of said another two-way valve, respectively, and said another two-way valve being closed during the defrosting operation.

4. The air conditioner of any one of claims 1 to 3, wherein a decompressor or an electric expansion valve is connected to the second bypass circuit to control the coolant flow.

5. The air conditioner of any one of claims 1 to 4, wherein a decompressor is disposed between the coolant heater and the indoor heat exchanger, and the coolant heater serves as an evaporator.

6. The air conditioner of any one of claims 1 to 5, wherein a check valve is disposed between the four-way valve and a connection point of the first bypass circuit and the suction part of the compressor or is disposed between the four-way valve and the outdoor heat exchanger, and the check valve being installed to direct coolant to flow toward the suction part of the compressor.

7. The air conditioner of any one of claims 1 to 6, wherein a distance between the connection part with a suction side of the first bypass circuit and the suction part of the compressor is set to be at least four times a diameter of a suction pipe of the compressor.

8. The air conditioner of any one of claims 1 to 7, wherein the coolant heater includes a heater unit, a coolant channel, a heat accumulation unit for surrounding the heater unit and the coolant channel with a heat accumulating material.
